# EUROPEAN PATENT SPECIFICATION

(11) **EP 1 833 410 B1**
(45) Date of publication and mention of the grant of the patent: **29.09.2010**
(21) Application number: 05825953.2
(22) Date of filing: 21.12.2005
(51) Int. Cl.: A61C 17/028

(54) **GAS-ASSISTED SYSTEM FOR FLUID DROPLET GENERATION IN AN ORAL CARE SYSTEM**
GASUNTERSTÜTZTES SYSTEM FÜR DIE ERZEUGUNG VON FLÜSSIGKEITSTRÖPFCHEN IN EINEM MUNDPFLEGESYSTEM
SYSTEME ASSISTE PAR GAZ POUR LA PRODUCTION DE GOUTTELETTES LIQUIDES DANS UN SYSTEME DE SOINS BUCCAUX

(30) Priority: 22.12.2004 US 638226 P
(43) Date of publication of application: 19.09.2007
(73) Proprietor: Koninklijke Philips Electronics N.V., 5621 BA Eindhoven (NL)
(72) Inventor: JANSSEN, Jozef Johannes Maria, Briarcliff Manor, NY 10510-8001 (US); GOTTENBOS, Bart, Briarcliff Manor, NY 10510-8001 (US); VAN DER SANDE, Arjan Leo, Briarcliff Manor, NY 10510-8001 (US); DUINEVELD, Paulus Corenelis, Briarcliff Manor, NY 10510-8001 (US); HAYENGA, Jon, Briarcliff Manor, NY 10510-8001 (US); PACE, John W., Briarcliff Manor, NY 10510-8001 (US); BRYANT, William, Briarcliff Manor, NY 10510-8001 (US); VAN BAREN, Martijn, Briarcliff Manor, NY 10510-8001 (US); DEKKER, Martijn Jeroen, Briarcliff Manor, NY 10510-8001 (US); HALL, Scott E., Briarcliff Manor, NY 10510-8001 (US)
(74) Representative: Damen, Daniel Martijn
(86) International application number: PCT/IB2005/054365
(87) International publication number: WO 2006/067760

(56) References cited:
- EP-A- 0 322 223
- WO-A-2004/034923
- WO-A-2005/070324
- US-A- 3 561 433
- US-A- 4 906 187
- US-A- 5 934 904
- US-A1- 2004 014 001

## Description

This invention relates generally to oral care systems using a stream of fluid droplets for cleaning, and more particularly concerns a system for assisting in fluid droplet generation and acceleration using pressurized gas.

Oral care devices using high speed fluid droplets are known. One system is shown in International Publication No. WO 2004/034923A1, which involves an oral care system which includes providing fluid at high pressure to a nozzle which produces a spray of droplets. Such a system is often referred to as a "liquid-only" system, because the fluid itself is delivered at high pressure, using a high pressure pump, to a nozzle which then creates the droplets at or beyond the nozzle orifice. Such systems, however, are disadvantageous because of the relatively small size of the droplets typically produced , the rapid deceleration of droplets beyond the nozzle orifice, and the corresponding high velocity necessary to produce effective cleaning.

Another example of a droplet stream oral cleaning system is shown in International Publication No. WO 9408533A1, which includes a source of fluid and a compressor for producing pressurized fluid for the creation of droplets directed with relative high velocity to the teeth for cleaning.

Still another droplet stream cleaning system is shown in International Publication No. WO 02/13721A3, which includes a source of pressurized gas, fluid and powder directed at high pressure toward the user's teeth. A hand-held portion of the unit is tethered to a base unit which contains liquid and a source of pressurized gas. The fluid is under high pressure when it reaches the nozzle. Such a tethered system requires more power and is often cumbersome to use.

Another fluid droplet system is shown in U.S. patent application Serial No. 60/537,690, filed on June 26, 2003, titled, *"Droplet Jet System for Cleaning ",* which is owned by the assignee of the present invention, the contents of which are incorporated by reference herein.

U.S. patent application Publication No. 2004/0014001A1 discloses a pneumatic dental care device. Particularly, the device consists of a base unit and a hand unit which are connected via a flexible, sheathed tube and wire bundle. The base unit contains a microcompressor, a liquid container and a powder container. Liquid and/or powder are discharged at high pressure through an exchangeable nozzle unit on the hand unit. The device is suitable to perform a process of "high pressure spraying" of teeth, which may include a combination of pressurized powder and liquid.

European patent application Publication No. 0322223A2 discloses an apparatus which is adapted for the delivery of a caries removal solution to a patient's oral cavity. Among other things, the apparatus comprises reservoirs containing liquid components of a dental caries/plaque removal solution, members for receiving pressure and fluid conduits of the reservoirs and forming fluid-tight couples with these conduits, and an air drafting system for dispensing the liquid components from their respective reservoirs and effecting their mixing and delivery to the oral cavity of a patient undergoing treatment. A flow rate, pulsation rate and pressure of the stream are selected such as to balance ease of application of the stream to the caries site with due regard for the patient's comfort.

The present invention is an oral care system using a stream of fluid droplets for cleaning, comprising: a hand-held portable oral care device having a handle portion with a nozzle at a forward end thereof; a source of fluid, which is a container located in the handle; a source of pressurized gas within the range of 0.5-1000 bar, which is a pressurized container located in the handle; and means for controlling the movement of pressurized gas and fluid to the nozzle in such a manner that fluid droplets are generated and then accelerated by the pressurized gas to a velocity of between 20 and 400 meters per second, and a base unit having a high pressure gas reservoir and a fluid reservoir and a compressor connected to the gas reservoir, wherein the base unit includes connection elements which mate with connection elements on the handle for refilling and pressurizing the gas container and the fluid container in the handle.
Figure 1 is a schematic drawing showing the overall system of the present invention.
Figure 2 shows a variation of the portion of the embodiment of Figure 1.

In general, the present invention is directed toward a gas-assisted fluid droplet stream oral cleaning system. Typically, the gas will be air, but it can be other types of gas as well. Low pressure gas accelerates fluid droplets generated at a nozzle portion of the system.

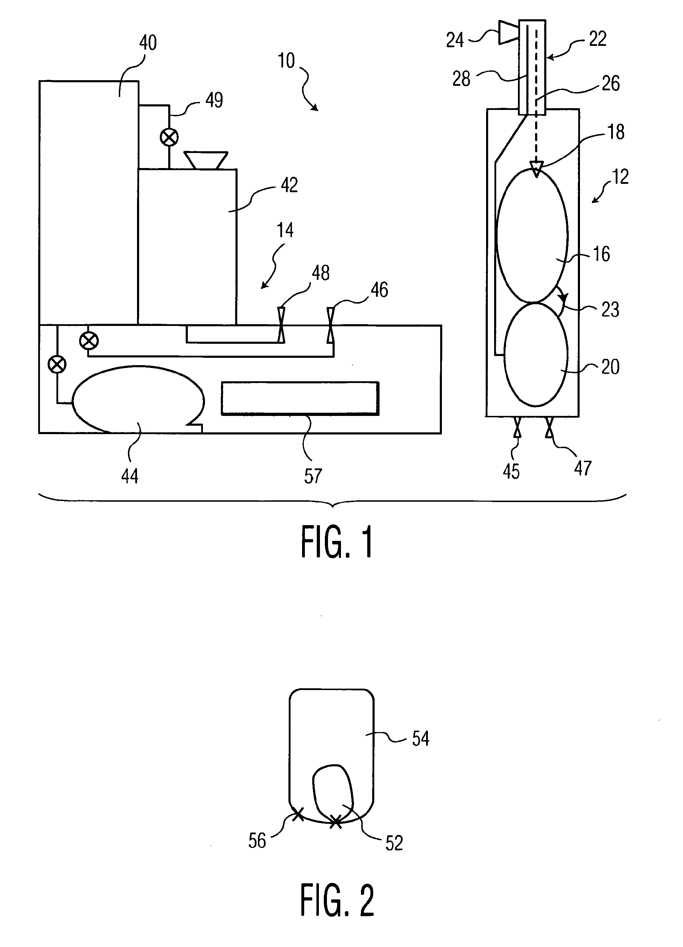

The system of the present invention is shown in Figure 1, generally indicated by the numeral 10. It includes a hand-held, portable handle unit 12 and a base unit 14. The handle unit 12 is separable from, *i.e.* not tethered to, base 14. Handle unit 12 includes a high pressure air tank 16 with a control valve 18, which regulates the flow and pressure of the pressurized gas to the nozzle, a tank 20 for liquid, such as water, a stem portion 22 and a nozzle 24 at the free, remote end of stem 22. Connecting ducts 26 and 28 extend from the air tank and liquid tank 20, respectively, through stem 22 to nozzle 24.

Typical pressure in the air tank 16 is between 0.5-100 bar and preferably between 5-50 bar. The volume of the tank 16 will be typically in the range of 10-200 cc, and preferably between 30-100 cc. Air delivered from tank 16 to nozzle 24 via control valve 18, used to accelerate liquid droplets, is less than 10 bar and preferable less than 5 bar. The volume of fluid tank 20 is between 20 and 100 cc.

The base unit portion 14 of the system includes a large volume, high pressure air storage reservoir tank 40, a large volume fluid storage reservoir 42 and a compressor/pump 44 which is used to pressurize gas storage reservoir 40. The high pressure air tank 16 in the handle can be pressurized through a high pressure connection 45 on the handle and a mating connection 46 on the base unit 14, the connection on the base unit extending to the gas storage reservoir 40. The handle fluid storage tank 20 can be refilled from the fluid storage tank 42 through a connection 47 on the handle and mating connection 48 on the base unit. The transfer of fluid can be accomplished with pressure from the high pressure air storage reservoir 40, as indicated by connection line 49. The volume of reservoir 40 will typically be in the range of 10-200 cc and preferably 20-80 cc.

Alternatively, a separate pump (not shown) can be used to move liquid from storage reservoir 42 in the base unit to storage tank 20 in the handle.

It is also possible, to have a pump in the handle 12 to pressurize air tank 16. The use of a pressurized container in the handle 12, however, as opposed to a separate pump in the handle or as opposed to use of a tethered arrangement between a base unit and a handle has an advantage of being efficient for the user. It is typically difficult to operate an air pump with batteries. In the embodiment, there is no pump or motor inside the handle. It is thus light and easy to operate.

Handle unit 12 also includes a control valve 23, connecting the high pressure air tank 16 to the fluid storage tank 20, which regulates the flow and pressure of the fluid delivery to the nozzle. In operation, fluid, such as water, is directed from storage tank 20 through its associated connecting duct 28 to nozzle 24, such that the fluid pressure upon reaching the nozzle is less than 10 bar, preferably less than 5 bar and fluid droplets are generated as one function of the nozzle prior to their exiting the nozzle orifice. The fluid droplets are accelerated by the pressurized gas from tank 16, prior to, at, and beyond the nozzle orifice. In the embodiment shown, the resulting droplet velocity produced by the system will be typically 30-200 meters per second for relatively large droplets of more than 30 micrometers in diameter, with larger velocities being possible for smaller droplets.

The velocity of the gas in the handle will be generally between 20-400 meters per second, and preferably between 50-200 meters per second. With the above arrangement, a relatively safe droplet velocity can be used with large size droplets. The fluid pressure at the nozzle will be relatively small, as discussed above, since the droplets are accelerated by the flow of pressurized gas. Hence, higher droplet velocities are possible, since high fluid pressure at the nozzle is no longer necessary to achieve the desired high velocity. The necessity of high pressure at the nozzle to achieve a desired high droplet velocity in other systems was a significant disadvantage for those systems.

In a variation of the embodiment of Figure 1, it is possible to have the liquid and the gas in one container in the handle, as shown in Figure 2. A fluid container 52 is positioned inside gas container 54. A valve 56 is used to remove condensation within the gas container.

Referring again to Figure 1, the base unit 14 can include various sensors, shown generally at 57, including a level indicator for fluid reservoir 42, a pressure sensor in the gas reservoir 40, and a temperature sensor for the liquid. Similar sensors can be used in the handle 12.

The temperature of the pressurized gas and the liquid in the handle can be important to the overall comfort of the user. When the pressurized gas moves from tank 18 under pressure to the nozzle 24, the temperature of the gas can drop substantially, producing a cold air stream on the teeth, which can be uncomfortable. To counteract that effect, the liquid in the liquid reservoir 20 can be heated to compensate, or the gas in the hand-held unit can be heated by a separate heating element (not shown) in the handle, which is actuated when the handle is in contact with the base unit.

In another feature, compressor 44 in the base unit can have both a rapid operation mode and a slow operation mode for refilling the gas reservoir in the base unit. The choice depends on the amount of noise which can be tolerated. The "slow fill" operation is quieter. The base unit can include several additional features, including several means to prevent use by children, including a simple clipping system connecting the handle to the base station, a code (unknown to the children) which is entered at the base unit, or a dead-man's switch.

A lock and key system can also be used in the base unit so that only authorized handles can be used with the base unit. Furthermore, an I.D. tag can be used to store statistical data concerning use of the system, such as the number of brushing times or the number of uses by various handles. Still further, the fluid reservoir 42 in the base unit can include a particular physical connection to prevent users from filling the reservoir with unauthorized liquid.

Control systems can be used on both the gas and liquid tanks in the handle to provide desired control over the droplet flow. Still further, various pressure protection means can be built into the system, including means for manually or automatically discharging pressure in the handle after a certain period of time following charging and/or discharging the pressure in the base unit. Automatic pressure relief valves may also be provided to prevent an unsafe buildup of pressure in the system.

This arrangement will produce cleansing of the teeth, including interdentally, when the fluid droplets are generated within the desired ranges of size and effective velocity.

The hand-held device of Figure 1 can be adapted for interdental cleaning. The face of the nozzle is configured to mate with the human interdental area, in effect sealing the interdental area and assisting in the droplets moving accurately through the interdental gap.

## Claims

1. An oral care system (10) using a stream of fluid droplets for cleaning, comprising:
a hand-held portable oral care device having a handle portion (12) with a nozzle (24) at a forward end thereof;
a source of fluid, which is a container (20) located in the handle (12);
a source of pressurized gas within the range of 0.5-100 bar, which is a pressurized container (16) located in the handle (12); and
means (18, 23) for controlling the movement of pressurized gas and fluid to the nozzle (24) in such a manner that fluid droplets are generated and then accelerated by the pressurized gas to a velocity of between 30 and 200 meters per second, and
a base unit (14) having a high pressure gas reservoir (40) and a fluid reservoir (42) and a compressor (44) connected to the gas reservoir (40), wherein the base unit (14) includes connection elements (48) which mate with connection elements (47) on the handle (12) for refilling and pressurizing the gas container (16) and the fluid container (20) in the handle (12).

2. The system (10) of claim 1, including means for discharging pressure in the gas reservoir (16, 40) in the handle (12) and/or the base unit (14).

3. The system (10) of claim 1, wherein the source of fluid (52) is located within the source of pressurized gas (54) in the handle (12).

4. The system (10) of claim 1, wherein the fluid reservoir (42) in the base unit (14) is configured to accept only authorized fluid.

5. The system (10) of claim 1, wherein the connection elements (47, 48) on the base unit (14) and the handle (12) are configured to prevent connection of unauthorized handles to the base unit (14).

6. The system (10) of claim 1, wherein the fluid container (20) has a volume of between 20 and 100 cc.

7. The system (10) of claim 1, wherein the velocity of the droplet accelerating gas is within the range of 20 and 400 meters per second.

8. The system (10) of claim 1, wherein the velocity of the droplet accelerating gas is within the range of 50 and 200 meters per second.

9. The system (10) of claim 1, including means for heating the fluid.

10. The system (10) of claim 1, including means for heating the pressurized gas.

11. The system (10) of claim 1, wherein the pressurized gas container (16) has a volume of between 30 and 100 cc.

## Patentansprüche

1. Mundpflegesystem (10) mit einem Strom von Flüssigkeitströpfchen zum Reinigen, mit:
einer von Hand geführten, portablen Mundreinigungsvorrichtung, die einen Griffteil (12) mit einer Düse (24) an einem vorderen Ende desselben aufweist;
einer Flüssigkeitsquelle, bei der es sich um einen in dem Griff (12) angeordneten Behälter (20) handelt;
einer Druckgasquelle innerhalb des Bereichs von 0,5-100 Bar, bei der es sich um einen in dem Griff (12) angeordneten Druckbehälter (16) handelt;
Mitteln (18, 23) zur Steuerung der Bewegung von Druckgas und Flüssigkeit zu der Düse (24) in einer solchen Weise, dass Flüssigkeitströpfchen erzeugt und sodann durch das Druckgas bis zu einer Geschwindigkeit zwischen 30 und 200 Metern pro Sekunde beschleunigt werden; sowie
einer Basiseinheit (14) mit einem Hochdruckgasbehälter (40) und einem Flüssigkeitsbehälter (42) sowie einem mit dem Gasbehälter (40) verbundenen Kompressor (44), wobei die Basiseinheit (14) Verbindungselemente (48) enthält, die mit Verbindungselementen (47) auf dem Griff (12) korrespondieren, um den Gasbehälter (16) und den Flüssigkeitsbehälter (20) in dem Griff (12) nachzufüllen und unter Druck zu setzen.

2. System (10) nach Anspruch 1, mit Mitteln zur Entladung von Druck in dem Gasbehälter (16, 40) in dem Griff (12) und/oder der Basiseinheit (14).

3. System (10) nach Anspruch 1, wobei die Flüssigkeitsquelle (52) innerhalb der Druckgasquelle (54) in dem Griff (12) angeordnet ist.

4. System (10) nach Anspruch 1, wobei der Flüssigkeitsbehälter (42) in der Basiseinheit (14) so konfiguriert ist, dass er ausschließlich zugelassene Flüssigkeit akzeptiert.

5. System (10) nach Anspruch 1, wobei die Verbindungselemente (47, 48) auf der Basiseinheit (14) und dem Griff (12) so konfiguriert sind, dass sie das Verbinden nicht zugelassener Griffe mit der Basiseinheit (14) verhindern.

6. System (10) nach Anspruch 1, wobei der Flüssigkeitsbehälter (20) ein Volumen zwischen 20 und 100 cc aufweist.

7. System (10) nach Anspruch 1, wobei die Geschwindigkeit des Tröpfchenbeschleunigungsgases innerhalb des Bereichs von 20 und 400 Metern pro Sekunde liegt.

8. System (10) nach Anspruch 1, wobei die Geschwindigkeit des Tröpfchenbeschleunigungsgases innerhalb des Bereichs von 50 und 200 Metern pro Sekunde liegt.

9. System (10) nach Anspruch 1, mit Mitteln zur Erwärmung der Flüssigkeit.

10. System (10) nach Anspruch 1, mit Mitteln zur Erwärmung des Druckgases.

11. System (10) nach Anspruch 1, wobei der Druckgasbehälter (16) ein Volumen zwischen 30 und 100 cc aufweist.

## Revendications

1. Système de soins buccaux (10) utilisant un jet de gouttelettes de fluide pour le nettoyage, comprenant :
un dispositif portatif de soins buccaux doté d'une partie formant poignée (12), et d'un gicleur (24) à une extrémité avant de celui-ci,
une source de fluide, qui est un contenant (20) disposé dans la poignée (12) ;
une source de gaz pressurisé allant de 0,5 à 100 bars, qui est un contenant sous pression (16) disposé dans la poignée (12) ; et
un moyen (18, 23) conçu pour contrôler l'acheminement de gaz pressurisé et de fluide vers le gicleur (24) de telle sorte que des gouttelettes de fluide soient générées puis accélérées par le gaz pressurisé pour atteindre une vitesse allant de 30 à 200 mètres par seconde, et
une unité de base (14) comprenant un réservoir de gaz sous haute pression (40) et un réservoir de fluide (42), ainsi qu'un compresseur (44) relié au réservoir de gaz (40), dans lequel l'unité de base (14) comprend des éléments de connexion (48) correspondant à des éléments de connexion (47) sur la poignée (12) pour recharger et pressuriser le contenant de gaz (16) et le contenant de fluide (20) dans la poignée (12).

2. Système (10) selon la revendication 1, comprenant des moyens d'évacuation de la pression dans le réservoir de gaz (16, 40) dans la poignée (12) et/ou l'unité de base (14).

3. Système (10) selon la revendication 1, dans lequel la source de fluide (52) est disposée à l'intérieur de la source de gaz pressurisé (54) dans la poignée (12).

4. Système (10) selon la revendication 1, dans lequel le réservoir de fluide (42) dans l'unité de base (14) est configuré de sorte à n'accepter qu'un fluide autorisé.

5. Système (10) selon la revendication 1, dans lequel les éléments de connexion (47, 48) sur l'unité de base (14) et la poignée (12) sont configurés pour empêcher le raccordement de poignées non autorisées à l'unité de base.

6. Système selon la revendication 1, dans lequel le contenant de fluide (20) a un volume allant de 20 à 100 cm³.

7. Système (10) selon la revendication 1, dans lequel la vitesse du gaz d'accélération des gouttelettes va de 200 à 400 mètres par seconde.

8. Système (10) selon la revendication 1, dans lequel la vitesse du gaz d'accélération des gouttelettes va de 50 à 200 mètres par seconde.

9. Système (10) selon la revendication 1, comprenant des moyens de chauffage du fluide.

10. Système (10) selon la revendication 1, comprenant des moyens de chauffage du gaz pressurisé.

11. Système (10) selon la revendication 1, dans lequel le contenant de gaz pressurisé (16) a un volume allant de 30 à 100 cm³.
